# EUROPEAN PATENT SPECIFICATION

(11) **EP 3 845 358 B1**
(45) Date of publication and mention of the grant of the patent: **06.03.2024**
(21) Application number: 20217482.7
(22) Date of filing: 29.12.2020
(51) Int. Cl.: B29C 45/76, B29C 45/27

(54) **METHOD FOR CONTROLLING THE THERMAL EXPANSION OF INJECTION MOLD COMPONENTS AND MOLDING EQUIPMENT FOR CARRYING OUT THE METHOD**
VERFAHREN ZUR STEUERUNG DER THERMISCHEN AUSDEHNUNG VON SPRITZGIESSFORMKOMPONENTEN UND FORMAUSRÜSTUNG ZUR DURCHFÜHRUNG DES VERFAHRENS
PROCÉDÉ DE CONTRÔLE DE L'EXPANSION THERMIQUE DE COMPOSANTS DE MOULE D'INJECTION ET ÉQUIPEMENT DE MOULAGE PERMETTANT DE METTRE EN UVRE LE PROCÉDÉ

(30) Priority: 30.12.2019 FI 20196138
(43) Date of publication of application: 07.07.2021
(73) Proprietor: SJOR Oy, 81700 Lieksa (FI)
(72) Inventor: Raassina, Seppo, 81700 Lieksa (FI); Huovinen, Markus, 90650 Oulu (FI)
(74) Representative: LEITZINGER OY

(56) References cited:
- EP-A1- 3 478 471
- US-A1- 2005 238 748

## Description

This invention relates to a method for controlling the thermal expansion of the internal parts of an injection mold used in the manufacture of plastic products as well as the equipment and structural principle of the injection mold used in implementing the method. The primary application of the invention is in multi-cavity hot runner molds, but use of the method according to the invention is not limited thereto.

The invention is characterized by what is defined in more detail in the characterizing parts of the independent claims. Embodiments relating to the implementation of the invention as well as details supplementary to the independent claims are defined in the dependent claims.

The internal structure of injection molds, i.e. die casting molds, particularly hot runner molds, consists of several separate components, some of which are heated to a desired temperature to ensure the fluidity of the molten plastic material to be fed, while some of the components are cooled to achieve the solidification of the plastic material. In principle, all components related to the feeding of molten plastic material, such as the manifold, the distribution channels and the feed channel systems as well as the feed nozzles of the mold cavities are heated, and correspondingly, the actual mold cavities defining the shape of the plastic product to be prepared are cooled. In some applications, the body components and the outer shell of the mold can also be cooled. The injection mold as a whole is installed in an injection molding machine, in which the plastic material is fed by means of an extruder screw in molten liquid form as hot material to the connecting nozzle of the mold at high pressure and further through the manifold and channel systems and feed nozzles to the mold cavities. Depending on the plastic material, the temperature of the molten plastic ranges typically between 180 and 400 °C.

Electrical resistors are primarily used for heating the components to be heated, and correspondingly, coolant, typically water, is used for cooling the components to be cooled, wherein the coolant is led through the coolant channel systems of the components to be cooled.

The mold components to be cooled and heated are in close contact with each other or they are partially nested components or partially overlapping components, whereby thermal expansions of different intensities and in different directions create movement between the components. Thermal expansions of different intensities and in different directions within the components and the internal mold parts bring about undesirable effects in the mold, such as the formation of clearances or gaps between contact surfaces between components that are intended to be in contact, as well as force effects causing malfunction in the components that are intended to be movable, such as the sensitive needle seal nozzles. Upon entering these clearances, the plastic material seeks to solidify into particles, which, upon moving, cause quality disruptions in the products to be prepared as well as malfunction of the components. The above-described issues become more obvious in multi-cavity molds, in which long feed channels are used. The issues related to the formation of undesirable clearances and gaps are also present at the mold cooling step.

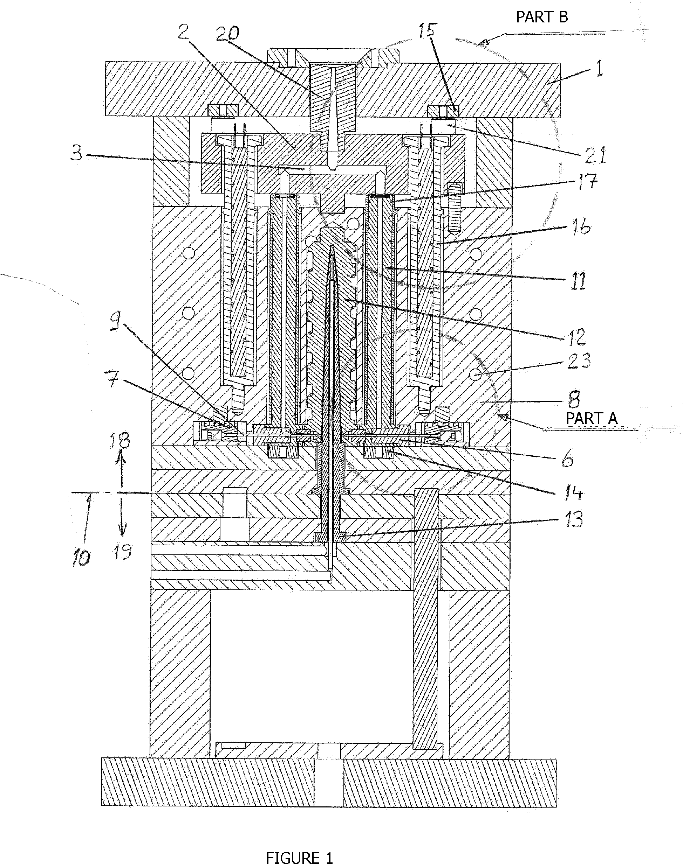

A typical problem arising from the thermal expansion of the components in hot runner molds is the movement between the mold mounting plate and the manifold when the mold parts are heated to the operating temperature. The problem is highlighted in a mold structure in which long feed channels are used due to the geometry of the plastic product to be prepared. A typical plastic product prepared by injection molding posing technical challenges for a molding perspective is an elongated endpiece used in pipettes, wherein the walls of the product have a very thin structure, for example 0.7 mm. In currently used injection molding technology, plastic material is injected from the direction of the base of the pipette with nozzles that are parallel to the longitudinal axis of the pipette. In order to improve product quality, optimal feeding of plastic into the mold quality takes place from the halfway of the elongated piece from opposite sides of the piece in the transverse direction of the piece to be prepared, whereby filling the mold is better achieved as compared to feeding from the end of the piece. In practice, the implementation of the solution shown in principle in figure 1 has been limited by the force effects caused by the thermal expansion of the components, resulting in malfunctions of the sensitive needle seal nozzles.

Heating the feed channels causes thermal elongation of the feed channels, resulting in a force effect on the needle seal nozzle positioned at the bottom end of the feed channel, causing its operating movement to, at worst, be blocked due to the needle bending as a result of the force effect. A corresponding force effect is exerted on the distribution channel at the top of the feed channel. To ensure the operation of the mold, and particularly the operation of the needle seal nozzles, the force effect exerted thereon should be better controlled compared to the methods currently in use.

A few technical solutions for compensating and controlling the thermal expansion of the internal parts of hot runner molds currently in use have been attempted, described hereinafter with reference to prior art patent publications.

The publication WO2019/008616A1 presents solutions related to the widely studied issue, but not the use of electrical resistors for compensating the forces.

In the publication US2018043592A1, hydraulics, or alternatively compressed air, is employed in operating the needle seal valves and compensating for thermal expansion.

In the publication US2016214296A1, materials with different thermal elongation coefficients are utilized for different components in order to compensate for problems caused by thermal expansions.

In the publication US2015197049A1, cup springs are employed for compensating for the force effects from thermal expansion.

In publication US2005/238748 A1, a solution is presented where an actuator is used to adjust a sealing force between components of the mold. The actuator is an active material actuator. Particularly an actuator made of piezoceramic is disclosed.

In publication EP3478471A1, a solution is presented where a controller identifies deviation from target strain profile and, if necessary, calculates how much temperature should be decreased in order to correct the deviation.

One practical solution employed is predicting the thermal expansions by way of calculation and taking into account the need for expansion clearances based on the calculations in dimensioning the various components.

With the method and mold equipment according to the invention herein presented, thermal expansion problems related to both the mold heating step as well as the cooling step can be resolved in a reliable manner, and in the case of a multi-cavity mold, on a mold-specific basis. The invention is characterized by compensating for the dimensional changes and force effects caused by the thermal expansion of the mold components that are heated and cooled, based on measuring and controlling the force effects caused by thermal expansion.

Next, the invention and its function are described with reference to the drawings, in which:
- Figure 1: shows, as an embodiment, a mold cavity of a multi-cavity mold in cross-section and equipped with the additional components comprised in the invention as a solution to the thermal expansion issues;
- Figure 2: shows part A of figure 1; and
- Figure 3: shows part B of figure 1.

Figure 1 shows, as an embodiment of the invention, a cross-section of a typical mold cavity of a multi-cavity hot runner mold used in the injection molding of endpieces of a pipette. The mold mounting plate 1 has a through passage for a connecting nozzle 20 attached to a manifold 2. Molten plastic material is fed via the connecting nozzle and the manifold channel system 3 through the feed channels 11 to the needle seal nozzles 6 and therethrough to the actual mold cavity 12. The actuators 7 of the needle seal nozzle are positioned in the mold body 8 and they actuate the axial movement of the needles 9 of the needle seal nozzles for closing and opening the nozzles. The mold is opened and closed during a working period from a parting surface 10 diving the mold into a fixed part 18 and a movable part 19. The connecting nozzle 20, manifold 2, feed channels 11 and needle seal nozzles 6 are components that are heated with electrical resistors. The mold body 8 and the actual mold cavity 12 as well as the core 13 acting as the mold for the interior surface of the plastic piece being prepared are water-cooled components equipped with coolant channels 23.

The mold according to the invention is further equipped with mold cavity specific force sensors 14 and 15 as well as electrically heated actuators 16 adapted for controlling the forces caused by thermal expansion. The actuators 16 are attached in their one end to the mold body 8 and tie the manifold 2 tightly to the end of the feed channels 11 with a selected pre-tensioning force. The pre-tensioning force can be controlled by means of the force sensors 14. The electrically heated feed channels 11 and the actuators 16 equipped with electrical heating elements may be thermally insulated from the mold body 8 using sleeve-like insulators 17. All of the force sensors 14, 15 of each mold cavity and the functions of the actuators 16 are connected to a steering and control unit comprising programs and controllers for controlling the actuators 16 so that desired force values are reached at the sites measured with the force sensors.

In the method according to the invention, in the mold heating step, the connecting nozzle 20, manifold 2, feed channels 11 and needle seal nozzles 6 are heated to a desired operating temperature, and simultaneously, the actuators 16 are heated so that their thermal expansion in the lengthwise direction compensates for the increase in the force value caused by the thermal expansion of the feed channels 11 and the manifold 2 and the needle seal nozzles 6 at the point of the force sensors 14. This arrangement prevents non-desirable force effects caused by thermal expansion of the components and prevents malfunction of the needle seal nozzles. Likewise, the non-desirable clearances forming between the different components can be eliminated. During use of the mold, the force balance can be controlled and adjusted by controlling the function of the actuators 16 by means of the software of the control unit, or, alternatively, between force values manually set in the control unit, such as an upper limit value and a lower limit value. The range of the force values is set such that the lower limit value allows for the prevention of non-desirable clearances from forming between the components and the upper limit value sets the limit for the maximum level of the force values caused by thermal expansion at which level the mold components function as intended.

The formation of clearances in the surfaces between the components can also be eliminated at the mold cooling step by controlling the force effects by means of the actuators 16. The use of force sensors 15 allows for potential fault situations, such as uncontrolled thermal expansion due to overheating of the mold, to be controlled.

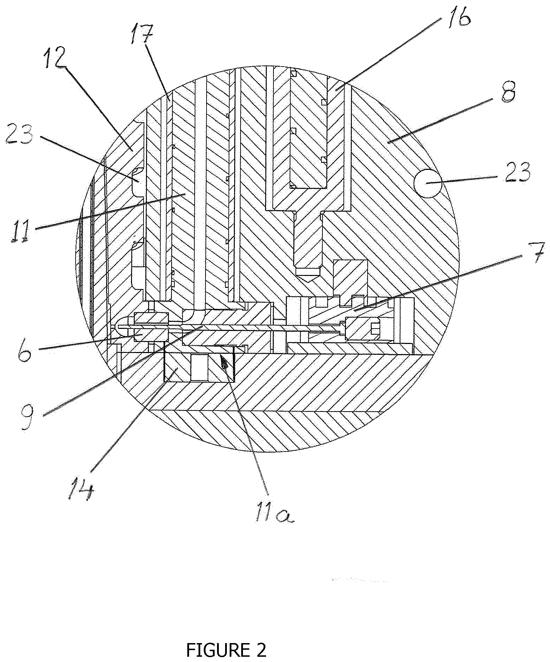

Figure 2 shows part A of figure 1 in more detail. The end surface 11a of the feed channel 11 abuts against the force sensor 14 without clearance. The actuator 16 is attached to the mold body 8 with a thread connection.

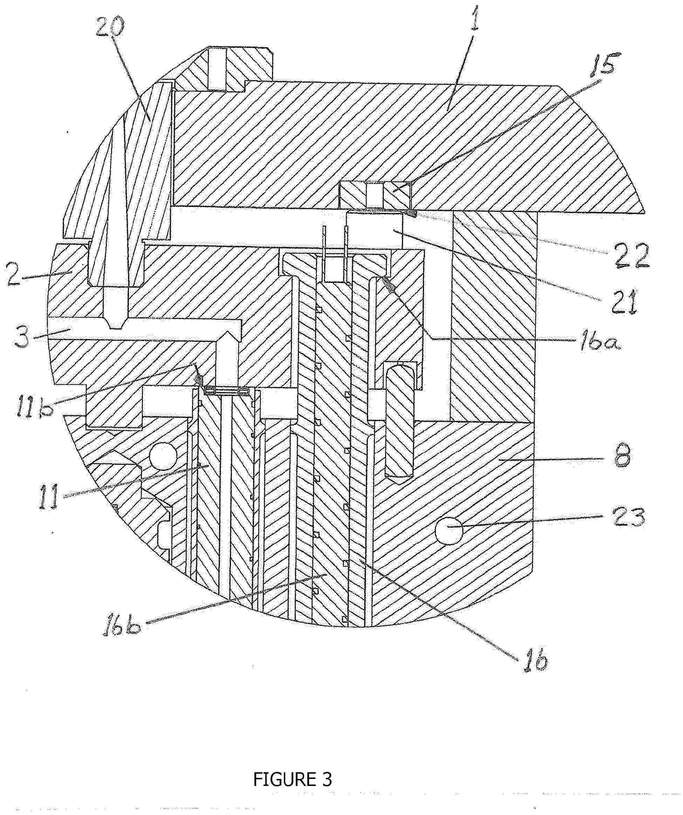

Figure 3 shows part B of figure 1 in more detail. The end surface 11b of the feed channel 11 abuts against the manifold 2 without clearance. The actuator 16 is fitted through the drilling in the manifold 2 and the shoulder 16a of the actuator abuts against the manifold 2 without clearance. Electrical heating of the actuator can be carried out by, for example, an internal electrical resistor 16b shown in the figure. A force sensor 15 is positioned in the mold mounting plate 1. When the mold is cold, there is a clearance 22 between the force sensor 15 and the abutment 21 fixedly attached to the manifold 2, allowing for the thermal expansion of the components to be heated.

The above figures 1 to 3 do not show the wiring of the force sensors or the electrical heating resistors, which are routed and arranged in a manner known in molding technology.

The application of the method according to the invention and its practical use in molding technology is not limited to the above presented exemplary embodiment, but the applications and constructive solutions can range widely within the scope of the invention as defined in the appended claims.

## Claims

1. A method for controlling the effects caused by thermal expansion of components of an injection mold, wherein the force effect between the components caused by thermal expansion of components heated and cooled within the mold is measured by means of at least one force sensor (14,15), and the measured force value is kept within a desired range by means of one or more actuators (16) installed in connection with the components compensating for the force effects caused by temperature changes, **characterized in that** the operating movement of the actuator (16) compensating for the force effect is based on controlling the thermal expansion of the actuator (16) by adjusting the temperature of the actuator (16).

2. The method according to claim 1, wherein the injection mold comprises a mold mounting plate (1) having a through passage for a connecting nozzle (20) attached to a manifold (2), a manifold (2) comprising a channel system (3), feed channels (11) and needle seal nozzles (6), and the method comprises a mold heating step, wherein the connecting nozzle (20), manifold (2), feed channels (11) and needle seal nozzles (6) are heated to a desired operating temperature, and simultaneously, the actuators (16) are heated so that their thermal expansion in the lengthwise direction compensates for the increase in the force value caused by the thermal expansion of the feed channels (11) and the manifold (2) and the needle seal nozzles (6) at the point of the force sensors (14).

3. The method according to claim 1, wherein the control of the compensating actuator (16) determined on the basis of the force value measured by the force sensor (14,15) is carried out in the control unit by means of a software program.

4. The method according to claim 1, wherein the control of the compensating actuator (16) determined on the basis of the force value measured by the force sensor (14,15) is carried out between operational values, such as an upper limit value and a lower limit value, manually set in the control unit.

5. The method according to claim 1, wherein in a multi-cavity injection mold, the force measurement is carried out on a mold cavity specific basis.

6. The method according to claim 1 or 2, wherein the operating movement of the actuator (16) compensating for the force effect is based on controlling the thermal expansion of the actuator (16) by adjusting the temperature of the actuator (16) by means of an electrical heating resistor (16b).

7. The method according to claim 1 or 2, wherein the actuators (16) are attached in their one end to the mold body (8) and tie the manifold (2) tightly to the end of the feed channels (11) with a selected pre-tensioning force, which pre-tensioning force can be controlled by means of the force sensors (14).

8. An injection mold for plastic products, which mold is equipped with one or more force sensors (14,15) for measuring the force effects between the components caused by thermal expansion due to temperature changes of the internal components of the mold, wherein the mold is equipped with one or more actuators (16) installed in connection with the internal components of the mold, compensating for the force effect between the components, wherein the operating movement of the actuator (16) is controlled on the basis of the force value measured with a force sensor (14, 15), **characterized in that** the operating movement of the compensating actuator (16) is carried out by means of the thermal expansion movement of the actuator (16) by adjusting the temperature of the actuator (16) by means of an electrical heating resistor (16b).

9. The injection mold according to claim 8, wherein the mold is equipped with a separate control unit comprising a display device for the measured force values and a software program required for controlling the compensating actuator (16) as well as manual controllers for the alternative manual adjustment of limit values.

## Patentansprüche

1. Verfahren zum Steuern der Wirkungen, die durch die Wärmeausdehnung von Bestandteilen einer Spritzgießform verursacht werden, wobei die Kraftwirkung zwischen den Bestandteilen, die durch die Wärmeausdehnung von Bestandteilen verursacht wird, die innerhalb der Form erwärmt und abgekühlt werden, mit Hilfe mindestens eines Kraftsensors (14, 15) gemessen wird und der gemessene Kraftwert mit Hilfe eines oder mehrerer Stellantriebe (16), die in Verbindung mit den Bestandteilen installiert sind, innerhalb eines gewünschten Bereichs gehalten werden, wobei sie die Kraftwirkungen ausgleichen, die durch Temperaturveränderungen verursacht werden, **dadurch gekennzeichnet, dass** die Arbeitsbewegung des Stellantriebes (16), welche die Kraftwirkung ausgleicht, auf dem Regeln der Wärmeausdehnung des Stellantriebes (16) durch Einstellen der Temperatur des Stellantriebes (16) beruht.

2. Verfahren nach Anspruch 1, wobei die Spritzgießform eine Formanbringungsplatte (1), die einen Durchgang für eine Verbindungsdüse (20), die an einem Verteiler (2) befestigt ist, aufweist, einen Verteiler (2), der ein Kanalsystem (3) umfasst, Speisekanäle (11) und Nadeldichtungsdüsen (6) umfasst und das Verfahren einen Formerwärmungsschritt umfasst, in dem die Verbindungsdüse (20), der Verteiler (2), die Speisekanäle (11) und die Nadeldichtungsdüsen (6) auf eine gewünschte Betriebstemperatur erwärmt werden und, gleichzeitig, die Stellantriebe (16) so erwärmt werden, dass ihre Wärmeausdehnung in der Längsrichtung die Zunahme bei dem Kraftwert, die durch die Wärmeausdehnung der Speisekanäle (11) und des Verteilers (2) und der Nadeldichtungsdüsen (6) verursacht wird, an der Stelle der Kraftsensoren (14) ausgleicht.

3. Verfahren nach Anspruch 1, wobei die Steuerung des ausgleichenden Stellantriebes (16), die auf der Grundlage des Kraftwertes festgelegt wird, der durch den Kraftsensor (14, 15) gemessen wird, in der Steuereinheit mit Hilfe eines Software-Programms ausgeführt wird.

4. Verfahren nach Anspruch 1, wobei die Steuerung des ausgleichenden Stellantriebes (16), die auf der Grundlage des Kraftwertes festgelegt wird, der durch den Kraftsensor (14, 15) gemessen wird, zwischen Betriebswerten, wie beispielsweise einem oberen Grenzwert und einem unteren Grenzwert, die manuell in der Steuereinheit festgesetzt werden, ausgeführt wird.

5. Verfahren nach Anspruch 1, wobei in einer Mehrfachhohlraum-Spritzgießform die Kraftmessung auf einer formhohlraumspezifischen Grundlage ausgeführt wird.

6. Verfahren nach Anspruch 1 oder 2, wobei die Arbeitsbewegung des Stellantriebes (16), welche die Kraftwirkung ausgleicht, auf dem Regeln der Wärmeausdehnung des Stellantriebes (16) durch Einstellen der Temperatur des Stellantriebes (16) mit Hilfe eines elektrischen Heizwiderstandes (16b) beruht.

7. Verfahren nach Anspruch 1 oder 2, wobei die Stellantriebe (16) an ihrem einen Ende an dem Formkörper (8) befestigt sind und den Verteiler (2) mit einer ausgewählten Vorspannkraft eng mit dem Ende der Speisekanäle (11) verbinden, wobei die Vorspannkraft mit Hilfe der Kraftsensoren (14) geregelt werden kann.

8. Spritzgießform für Kunststofferzeugnisse, wobei die Form mit einem oder mehreren Kraftsensoren (14, 15) zum Messen der Kraftwirkungen zwischen den Bestandteilen, die durch die Wärmeausdehnung auf Grund von Temperaturveränderungen der inneren Bestandteile der Form verursacht werden, ausgestattet ist, wobei die Form mit einem oder mehreren Stellantrieben (16) ausgestattet ist, die in Verbindung mit den inneren Bestandteilen der Form installiert sind, wobei sie die Kraftwirkung zwischen den Bestandteilen ausgleichen, wobei die Arbeitsbewegung des Stellantriebes (16) auf Grundlage des Kraftwertes gesteuert wird, der mit einem Kraftsensor (14, 15) gemessen wird, **dadurch gekennzeichnet, dass** die Arbeitsbewegung des ausgleichenden Stellantriebes (16), welche die Kraftwirkung ausgleicht, mit Hilfe der Wärmeausdehnungsbewegung des Stellantriebes (16) durch Einstellen der Temperatur des Stellantriebes (16) mit Hilfe eines elektrischen Heizwiderstandes (16b) ausgeführt wird.

9. Spritzgießform nach Anspruch 8, wobei die Form mit einer gesonderten Steuereinheit ausgestattet ist, die eine Anzeigevorrichtung für die gemessenen Kraftwerte und ein Software-Programm, das zum Steuern des ausgleichenden Stellantriebes (16) erforderlich ist, sowie manuelle Steuereinrichtungen für die alternative manuelle Einstellung von Grenzwerten umfasst.

## Revendications

1. Procédé de commande des effets causés par la dilatation thermique de composants d'un moule d'injection, dans lequel l'effet de force entre les composants causé par la dilatation thermique de composants chauffés et refroidis dans le moule est mesuré à l'aide d'au moins un capteur de force (14, 15), et la valeur de force mesurée est maintenue dans une plage souhaitée à l'aide d'un ou de plusieurs actionneurs (16) installés en liaison avec les composants, destinés à compenser les effets de force causés par des variations de température, **caractérisé en ce que** le mouvement de fonctionnement de l'actionneur (16) destiné à compenser l'effet de force est basé sur la commande de la dilatation thermique de l'actionneur (16) par réglage de la température de l'actionneur (16).

2. Procédé selon la revendication 1, dans lequel
le moule d'injection comprend une plaque de montage de moule (1) présentant un passage traversant pour un buse de raccordement (20) fixée à une tubulure (2), la tubulure (2) comprenant un système de canaux (3), des canaux d'alimentation (11) et des buses scellées par aiguille (6), et le procédé comprend une étape de chauffage de moule, dans lequel la buse de raccordement (20), la tubulure (2), les canaux d'alimentation (11) et les buses scellées par aiguille (6) sont chauffés à une température de fonctionnement souhaitée, et simultanément, les actionneurs (16) sont chauffés de manière à ce que leur dilatation thermique dans la direction longitudinale compense l'augmentation dans la valeur de force causée par la dilatation thermique des canaux d'alimentation (11) et de la tubulure (2) et des buses scellées par aiguille (6) au niveau des capteurs de force (14).

3. Procédé selon la revendication 1, dans lequel
la commande de l'actionneur de compensation (16) déterminée sur la base de la valeur de force mesurée par le capteur de force (14, 15) est exécutée dans l'unité de commande à l'aide d'un programme logiciel.

4. Procédé selon la revendication 1, dans lequel
la commande de l'actionneur de compensation (16) déterminée sur la base de la valeur de force mesurée par le capteur de force (14, 15) est exécutée entre des valeurs de fonctionnement, telles qu'une valeur de limite supérieure et une valeur de limite inférieure, réglées manuellement dans l'unité de commande.

5. Procédé selon la revendication 1, dans lequel
dans un moule d'injection à plusieurs cavités, la mesure de force est effectuée sur une base spécifique aux cavités du moule.

6. Procédé selon la revendication 1 ou 2, dans lequel
le mouvement de fonctionnement de l'actionneur (16) destiné à compenser l'effet de force est basé sur la commande de la dilatation thermique de l'actionneur (16) par réglage de la température de l'actionneur (16) à l'aide d'une résistance de chauffage électrique (16b) .

7. Procédé selon la revendication 1 ou 2, dans lequel
les actionneurs (16) sont fixés par l'une de leurs extrémités au corps de moule (8) et lient la tubulure (2) fermement à l'extrémité des canaux d'alimentation (11) avec une force de précontrainte sélectionnée, ladite force de précontrainte pouvant être commandée à l'aide des capteurs de force (14).

8. Moule d'injection pour produits en plastique, ledit moule étant équipé d'un ou de plusieurs capteurs de force (14, 15) destinés à mesurer les effets de force entre les composants, causés par une dilatation thermique due à des variations de température dans les composants internes du moule, dans lequel le moule est équipé d'un ou de plusieurs actionneurs (16) installés en liaison avec les composants internes du moule, lesquels compensent l'effet de force entre les composants, dans lequel le mouvement de fonctionnement de l'actionneur (16) est commandé sur la base de la valeur de force mesurée à l'aide d'un capteur de force (14, 15), **caractérisé en ce que** le mouvement de fonctionnement de l'actionneur de compensation (16) est exécuté à l'aide du mouvement de dilatation thermique de l'actionneur (16) par réglage de la température de l'actionneur (16) à l'aide d'une résistance de chauffage électrique (16b).

9. Moule d'injection selon la revendication 8, dans lequel
le moule est équipé d'une unité de commande séparée comprenant un dispositif d'affichage pour les valeurs de force mesurées et un programme logiciel nécessaire pour commander l'actionneur de compensation (16) ainsi que des moyens de commande manuels pour le réglage manuel alternatif de valeurs limites.
